# EUROPÄISCHE PATENTSCHRIFT

(11) **EP 4 414 598 B1**
(45) Veröffentlichungstag und Bekanntmachung des Hinweises auf die Patenterteilung: **22.07.2026**
(21) Anmeldenummer: 23155259.7
(22) Anmeldetag: 07.02.2023
(51) Int. Cl.: F16P 3/08, E05C 3/24

(54) **SICHERHEITSEINRICHTUNG**
SAFETY DEVICE
DISPOSITIF DE SÉCURITÉ

(43) Veröffentlichungstag der Anmeldung: 14.08.2024
(73) Patentinhaber: EUCHNER GmbH + Co. KG, 70771 Leinfelden-Echterdingen (DE)
(72) Erfinder: Ebinger, Thomas, 70736 Fellbach (DE); Gehrke, Mike, 73269 Hochdorf (DE); Graubner, Anke, 70771 Leinfelden-Echterdingen (DE); Grimm, Ilo, 71111 Waldenbuch (DE); Häußler, Johannes, 73087 Bad Boll (DE); Maier, Adrian, 70771 Leinfelden (DE); Rehfuß, Anja, 70771 Leinfelden-Echterdingen (DE); Stemmer, Florian, 72141 Walddorfhäslach (DE); Wilpert, Dominik, 70179 Stuttgart (DE)
(74) Vertreter: Ruckh, Rainer Gerhard

(56) Entgegenhaltungen:
- DE-A1- 10 351 665
- DE-A1- 102004 038 488
- DE-C5- 19 902 561
- US-A- 4 783 102

## Beschreibung

Die Erfindung betrifft eine Sicherheitseinrichtung.

Derartige Sicherheitseinrichtungen werden im Bereich der Sicherheitstechnik insbesondere im Bereich der Maschinensicherheit eingesetzt.

Eine typische Überwachungsfunktion einer Sicherheitseinrichtung besteht in der Überwachung einer trennenden Schutzeinrichtung, wie z.B. einer Schutztür, über welche ein Zugang zu einem Gefahrenbereich an einer Maschine oder Anlage ermöglicht wird.

Bekannte Sicherheitseinrichtungen weisen Sicherheitsschalter auf.

Der Betrieb einer gefahrbringenden Anlage innerhalb des Gefahrenbereichs wird von einer Sicherheitssteuerung nur dann freigegeben, wenn mit dem Sicherheitsschalter festgestellt wird, dass sich die trennende Schutzeinrichtung in ihrer Schließstellung befindet. Hierzu kann der Sicherheitsschalter beispielsweise eine RFID-Einheit aufweisen, mit der ein der trennenden Schutzeinrichtung zugeordneter Transponder erfasst wird. Die Funktionalität des Sicherheitsschalters kann durch eine Zuhaltung erweitert werden, die die trennende Schutzeinrichtung in ihrer Schließstellung verriegelt. Die Zuhaltung der trennenden Schutzeinrichtung erfolgt derart, dass ein Zuhalteelement der Zuhaltevorrichtung, insbesondere ein Zuhaltebolzen in eine Sperrstellung eingefahren wird. Zum Einfahren des Zuhalteeelements in die Sperrstellung ist ein elektrischer oder elektromagnetischer Antrieb vorgesehen.

Bei einer auf die Zuhaltevorrichtung wirkenden mechanischen Überlast kann es zu einem Bruch des Zuhalteelements kommen und damit zu einer Fehlfunktion der Zuhaltevorrichtung. Dadurch wird trotz einer vom Sicherheitsschalter generierten Sicherheitsfunktion der Gefahrenbereich für Personen zugänglich, was zu Gefahrensituationen führen kann, insbesondere dann, wenn die Maschine oder Anlage noch gefährliche, unkontrollierte nachwirkende Maschinen- oder Anlagenzustände aufweist.

Die DE 103 51 665 A1 betrifft ein Schließsystem für ein Kraftfahrzeug bestehend aus einem Öffnungsmechanismus, wobei der Öffnungsmechanismus in seiner Geschlossenlage eine Tür, Haube oder Klappe geschlossen hält und in seiner Offenlage zur Öffnung freigibt, und einem ersten Sperrelement und einem zweiten Sperrelement, welche jeweils eine sperrende Lage und eine freigebende Lage einnehmen können. Der Öffnungsmechanismus wird in seiner Geschlossenlage gesperrt, sofern sich wenigstens eines der beiden Sperrelemente in seiner sperrenden Lage befindet. Der Öffnungsmechanismus wird nur dann von seiner Geschlossenlage in seine Offenlage gebracht, wenn sich das erste Sperrelement und das zweite Sperrelement in ihrer freigebenden Lage befinden.

Die DE 199 02 561 C5 betrifft eine Verschluss mit von einer Sperrklinke in einer Schließstellung verrastbaren und nach einem durch Betätigen eines Sperrklinken-Betätigungsorgans verursachten Schwenken der Sperrklinke aus dieser Sperrstellung in eine Freigabestellung verlagerbaren Drehfalle. Die Sperrklinke ist in ihrer Sperrstellung von einem bei Betätigung des Sperrklinken-Betätigungsorgans vorauslösbaren Blockierglied bewegungsblockiert. Das Betätigungsorgan ist ein um einen Freigang zur Sperrklinke gegen einen Anschlag derselben schwenkbarer Hebel mit einer Steuerschräge zum Verlagern des Blockiergliedes, wobei das Blockierglied ein Hebel ist, der mit seinem Hebelarm in der Blockierstellung vor einem Sperrklinken-Abschnitt liegt und durch Verschwenken vor die Mündung einer Ausweichnische der Sperrklinke bringbar ist.

Die US 4 783 102 A betrifft eine Sperrklinkenanordnung mit einem Klinkenelement und einem mit diesem zusammenarbeitenden Gabelelement. Die Sperrklinkenanordnung bildet ein zweistufiges Verschlusssystem, das insbesondere für Türen von Kraftfahrzeugen eingesetzt wird.

Der Erfindung liegt die Aufgabe zugrunde eine Sicherheitseinrichtung mit einem hohen Sicherheitsniveau bereitzustellen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Sicherheitseinrichtung mit einem Sicherheitsmodul und einem relativ zu diesem beweglichen Betätiger, wobei der Betätiger in eine Schließstellung in oder am Sicherheitsmodul einbringbar ist. Weiter ist eine Zuhaltevorrichtung vorhanden, mittels derer der Betätiger in seiner Schließstellung verriegelbar ist. Es ist ein Sicherheitssystem vorhanden, mittels dessen der Betätiger in seiner Schließstellung zusätzlich verriegelbar ist. Das Sicherheitssystem ist derart ausgebildet, den Betätiger in seiner Schließstellung zu verriegeln, falls durch eine Fehlfunktion der Zuhaltevorrichtung dessen Verriegelungsfunktion aufgehoben ist. Die Verriegelung des Betätigers durch die Zuhaltevorrichtung ist dadurch bewirkt, dass ein Element der Zuhaltevorrichtung in eine erste Aufnahme des Betätigers eingeführt ist. Die Verriegelung des Betätigers durch das Sicherheitssystem ist dadurch bewirkt, dass ein Element des Sicherheitssystems in eine zweite Aufnahme des Betätigers eingeführt ist.

Die Erfindung betrifft weiterhin ein entsprechendes Verfahren.

Die erfindungsgemäße Sicherheitseinrichtung wird im Bereich der Sicherheitstechnik, insbesondere im Bereich der Maschinensicherheit eingesetzt und weist hierzu vorteilhaft einen den normativen Anforderungen entsprechenden fehlersicheren Aufbau auf.

Die Sicherheitseinrichtung umfasst ein mit einem Betätiger zusammenwirkendes Sicherheitsmodul. Das Sicherheitsmodul mit dem Betätiger kann zur Sicherung einer trennenden Schutzeinrichtung dienen.

Besonders vorteilhaft handelt es sich bei der trennenden Schutzeinrichtung um eine Schutztür, die einen Zugang zu einem Gefahrenbereich einer Maschine der Anlage verschließen kann. Generell kann es sich bei der trennenden Schutzeinrichtung auch um eine Klappe, eine Tür oder dergleichen handeln.

Als Sicherheitsmodul kann die Sicherheitseinrichtung prinzipiell ein Sensormodul, ein Zuhaltemodul, einen Aktor, ein Steuer- und Auswertemodul oder dergleichen umfassen.

Besonders vorteilhaft ist das Sicherheitsmodul als Sicherheitsschalter ausgebildet.

Mit dem Sicherheitsschalter wird kontrolliert, ob sich der Betätiger in seiner Schließstellung befindet. Hierzu kann der Sicherheitsschalter eine RFID-Einheit aufweisen, mit der aus einem Transponder im Betätiger Daten ausgelesen werden können, wenn sich der Betätiger in seiner Schließstellung am Sicherheitsschalter befindet.

Wird mit einem derartigen Sicherheitsschalter eine trennende Schutzeinrichtung als Zugang zu einem Gefahrenbereich an einer Anlage abgesichert, wird der Betrieb der Anlage nur dann freigegen, wenn mit dem Sicherheitsschalter festgestellt wird, dass sich der Betätiger und damit die trennende Schutzeinrichtung, an welcher der Betätiger angebracht ist, in seiner Schließstellung befindet und diese Schließstellung verriegelt ist.

Erfindungsgemäß erfolgt die Verriegelung der Betätigung in seiner Schließstellung nicht nur mit einer Zuhaltevorrichtung sondern zusätzlich mit einem Sicherheitssystem.

Dadurch wird eine zweikanalige Verriegelungsstruktur bereitgestellt, welche die Fehlersicherheit der erfindungsgemäßen Sicherheitseinrichtung erhöht.

Wesentlich hierbei ist, dass das Sicherheitssystem hinsichtlich Konstruktion und Funktionsweise derart an die Zuhaltevorrichtung angepasst ist, dass bei einer Fehlfunktion der Zuhaltevorrichtung, insbesondere bei einem Bruch eines Elements der Zuhaltevorrichtung, durch welche die Verriegelungsfunktion der Zuhaltevorrichtung aufgehoben ist, das Sicherheitssystem noch funktionsfähig ist und den Betätiger verriegelt. Damit ist bei der erfindungsgemäßen Sicherheitseinrichtung die Verriegelung des Betätigers auch bei einer Fehlfunktion der Zuhaltevorrichtung und einer dadurch bedingten Aufhebung der Verriegelung durch die Zuhaltevorrichtung die Verriegelung des Betätigers noch durch das Sicherheitssystem gewährleistet.

Somit bildet die Zuhaltevorrichtung und das Sicherheitssystem eine diversitäre redundante mechanische Verriegelungsstruktur aus.

Die Diversität der zweikanaligen Verriegelungsstruktur ist durch die unterschiedlichen Funktionen der Zuhaltevorrichtung und des Sicherheitssystems gegeben.

Insbesondere bei Einwirken äußerer Kräfte auf den in seiner Schließstellung mittels der Zuhaltevorrichtung und des Sicherheitssystems verriegelten Betätigers die ist Zuhaltevorrichtung mit größeren Kräften als das Sicherheitssystem beaufschlagt.

Dies wird durch unterschiedliche Anbindungen der Zuhaltevorrichtung und des Sicherheitssystems an den Betätiger in seiner Schließstellung erreicht. Bei bewirkter Verriegelung des Betätigers mittels der Zuhaltevorrichtung und des Sicherheitssystems ist deren Anbringung an den Betätiger unterschiedlich derart, dass auf den Betätiger einwirkende Kräfte unmittelbar auf die Zuhaltevorrichtung übertragen werden, nicht aber auf das Sicherheitssystem.

Bei einer Überlastsituation, die auf den Betätiger, vorzugsweise über die trennende Schutzeinrichtung, einwirkt, wird somit nur eine Fehlfunktion der Zuhaltevorrichtung erhalten, insbesondere in Form eines Bruchs eines Elements der Zuhaltevorrichtung, wodurch die Verriegelungsfunktion der Zuhaltevorrichtung aufgehoben ist. Da zu diesem Zeitpunkt das Sicherheitssystem der Überlast nicht oder nur in geringem Maß ausgesetzt war, bleibt diese funktionsfähig und hält die Verriegelung des Betätigers aufrecht.

Die Fehlersicherheit der erfindungsgemäßen Sicherheitseinrichtung wird vorteilhaft dadurch noch weiter erhöht, dass Erfassungsmittel zur Erfassung einer Fehlfunktion der Zuhaltevorrichtung vorhanden sind.

Die Zuhaltevorrichtung wird generell mit einem Aktor betätigt, um ein Einfahren in eine Verriegelungsstellung am Betätiger zu bewirken oder auch ein Ausfahren aus der Verriegelungsstellung zu bewirken.

Mit den Erfassungsmitteln wird dieser Aktor dahingehend überwacht, ob dieser die Zuhaltevorrichtung in die Verriegelungsstellung eingefahren hat oder nicht.

Zudem weisen die Erfassungsmittel Sensormittel auf, mit denen festgestellt wird, ob die Zuhaltevorrichtung den Betätiger tatsächlich verriegelt. Insbesondere wird mit den Sensormitteln festgestellt, ob ein Element der Zuhaltevorrichtung in eine Aufnahme des Betätigers greift und ihn dadurch verriegelt. Die Sensormittel können beispielsweise von einer Lichtschranke gebildet sein.

Wird mit den Erfassungsmitteln zur Überwachung des Aktors festgestellt, dass der Aktor die Zuhaltevorrichtung in die Verriegelungsstellung eingefahren hat, und wird gleichzeitig mit den Sensormitteln festgestellt, dass die Zuhaltevorrichtung die Verriegelung des Betätigers nicht bewirkt, liegt eine Fehlfunktion der Zuhaltevorrichtung vor, insbesondere ein Bruch der Zuhaltevorrichtung durch eine mechanische Überlast.

Wird eine derartige Fehlfunktion der Zuhaltevorrichtung festgestellt, wird insbesondere durch Ausgangssignale des Sicherheitsmoduls, insbesondere des Sicherheitsschalters, das Freigabesignal für den Betrieb der Anlage aufgehoben und diese in einen sicheren Zustand versetzt.

Zudem bleibt die Verriegelung des Betätigers auch aktiv, wodurch ein Öffnen der trennenden Schutzeinrichtung, an welcher der Betätiger angeordnet ist, verhindert ist, so dass keine Personen in den Gefahrenbereich gelangen können.

Dadurch werden Gefahrenzustände für Personen mit hoher Sicherheit vermieden.

Erfindungsgemäß ist die Verriegelung des Betätigers durch die Zuhaltevorrichtung dadurch bewirkt, dass ein Element der Zuhaltevorrichtung in eine erste Aufnahme des Betätigers eingeführt ist, und dass die Verriegelung des Betätigers durch das Sicherheitssystem dadurch bewirkt ist, dass ein Element des Sicherheitssystems in eine zweite Aufnahme des Betätigers eingeführt ist.

In diesem Fall ist das Element der Zuhaltevorrichtung in direktem Kontakt mit der ersten Aufnahme. Das Element des Sicherheitssystems ist mit Spiel in der zweiten Aufnahme eingeführt.

Dadurch werden auf den Betätiger einwirkende Kräfte direkt auf die Zuhaltevorrichtung übertragen, nicht aber auf das Sicherheitssystem.

Gemäß einer ersten Variante der Erfindung führen die Zuhaltevorrichtung und das Sicherheitssystem voneinander unabhängige Stellbewegungen durch.

Vorteilhaft ist dann sowohl der Zuhaltevorrichtung als auch dem Sicherheitssystem ein Aktor zugeordnet, der die jeweiligen Stellbewegungen bewirkt.

Gemäß einer zweiten Variante der Erfindung führen die Zuhaltevorrichtung und das Sicherheitssystem gekoppelte Stellbewegungen durch.

In diesem Fall ist nur ein Aktor notwendig, der die Stellbewegungen sowohl der Zuhaltevorrichtung als auch des Sicherheitssystems bewirkt.

In diesem Fall ist vorteilhaft bei einer Fehlfunktion der Zuhaltevorrichtung das Sicherheitssystem von der Zuhaltevorrichtung entkoppelt.

Dadurch wird verhindert, dass eine Fehlfunktion der Zuhaltevorrichtung die Verriegelungsfunktion des Sicherheitssystems beeinträchtigt.

Dabei kann die Entkopplung durch einen Bruch des in die erste Aufnahme eingeführten Elements der Zuhaltevorrichtung dadurch bewirkt sein, dass sich das Sicherheitssystem bei einem solchen Bruch nicht vom Betätiger löst.

Besonders vorteilhaft wird die Entkopplung durch eine bei einer auf die Zuhaltevorrichtung einwirkenden Überlast ansprechende Sicherheitskupplung bewirkt.

Besonders vorteilhaft weist das Sicherheitssystem ein Stellbewegungen ausführendes Sicherheitselement auf, das in die zweite Aufnahme einführbar ist.

Die Stellbewegungen werden vorteilhaft mittels eines Aktors bewirkt.

Weiter vorteilhaft weist die Zuhaltevorrichtung ein intermediäres Element auf, welches ein Segment aufweist, das in einer Sperrstellung des intermediären Elements in die erste Aufnahme greift. Das intermediäre Element ist mittels eines Zuhalteelements in seiner Sperrstellung verriegelbar.

Im ersten Fall wird, insbesondere mittels eines Aktors, zur Verriegelung des Betätigers das Zuhalteelement in diese erste Aufnahme eingeführt.

Im zweiten Fall weist die Zuhaltevorrichtung ein intermediäres Element auf, wobei zur Verriegelung des Betätigers ein Segment des intermediären Elements in die zweite Aufnahme des Betätigers greift, wenn das intermediäre Element in eine Sperrstellung eingebracht ist. Beispielsweise kann das intermediäre Element eine drehbar gelagert Schaltscheibe sein, deren Außenkontur eine Zwangsführung derart bildet, dass bei Einfahren des Betätigers die Schaltscheibe selbsttätig in die Schließstellung überführt wird. In jedem Fall wird das intermediäre Element in seiner Sperrstellung mit dem Zuhalteelement verriegelt, wodurch die Verriegelung des Betätigers mit der Zuhaltevorrichtung bewirkt ist.

Die Erfindung wird im Folgenden anhand der Zeichnungen erläutert. Es zeigen:
- Figur 1:: Ausführungsbeispiel der erfindungsgemäßen Sicherheitseinrichtung für eine trennende Schutzeinrichtung.
- Figur 2:: Erste Ausführungsform eines Verriegelungsmechanismus für einen an einer Schutztür angebrachten Betätiger bei offener Schutztür.
- Figur 3:: Anordnung gemäß Figur 2 bei angelehnter Schutztür.
- Figur 4:: Anordnung gemäß Figur 2 bei eingerasteter Schutztür.
- Figur 5:: Anordnung gemäß Figur 2 bei verriegelter Schutztür.
- Figur 6:: Zweite Ausführungsform eines Verriegelungsmechanismus für einen an einer Schutztür angebrachten Betätiger bei offener Schutztür.
- Figur 7:: Anordnung gemäß Figur 6 bei verriegelter Schutztür.
- Figur 8:: Anordnung gemäß Figur 6 bei einwirkender Überlastung.
- Figur 9:: Teildarstellung einer Sicherheitskupplung der Anordnungen gemäß Figuren 6 bis 8.

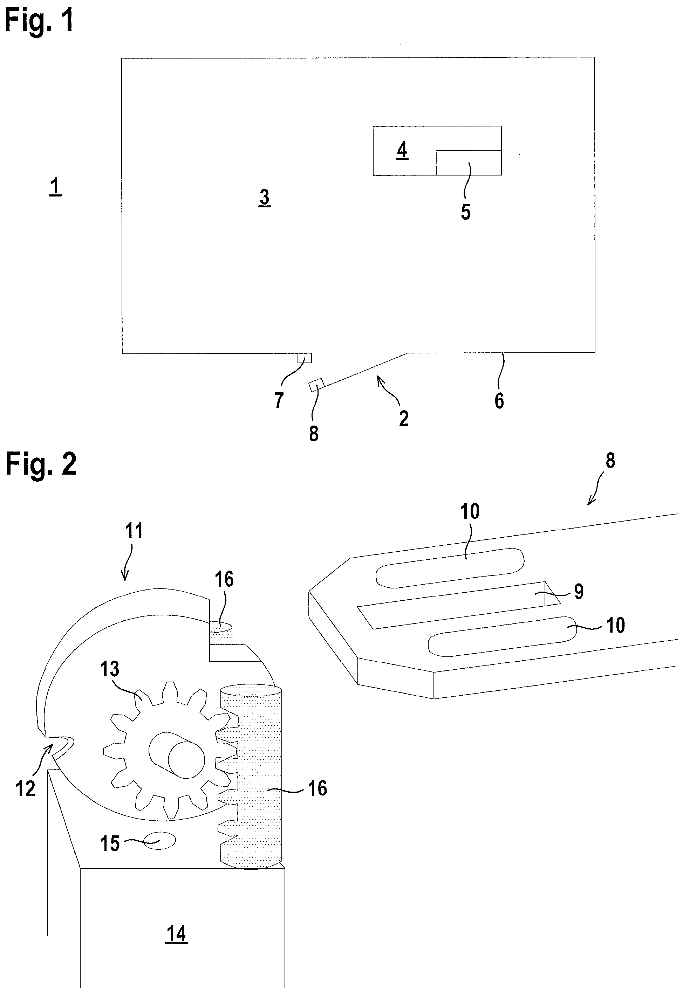

Figur 1 zeigt schematisch eine Sicherheitseinrichtung 1 für eine trennende Schutzeinrichtung 2, in Form einer Schutztür mit der ein Zugang zu einem Gefahrenbereich 3 an einer Anlage 4 verschlossen oder geöffnet werden kann. Die Sicherheitseinrichtung 1 überwacht die trennende Schutzeinrichtung 2 und generiert abhängig hiervon Ausgangssignale mit der der Betrieb einer Sicherheitssteuerung 5 der Anlage 4 gesteuert wird.

Die trennende Schutzeinrichtung 2 ist in einer Umzäunung 6 integriert, die den Gefahrenbereich 3 umgibt.

Die Sicherheitseinrichtung 1 umfasst einen stationär an der Umzäunung 6 angeordneten Sicherheitsschalter 7 und einen an der trennenden Schutzeinrichtung 2 angeordneten Betätiger 8. Der Sicherheitsschalter 7 weist eine Zuhaltevorrichtung auf. Zudem ist in dem Sicherheitsschalter 7 eine RFID-Leseeinheit integriert. Im Betätiger 8 befindet sich ein Transponder.

Befindet sich die trennende Schutzeinrichtung 2 und damit auch der Betätiger 8 in einer Schließstellung, befindet sich der Transponder im Lesebereich der RFID-Leseeinheit, so dass dann diese Daten aus dem Transponder auslesen kann. Nur wenn mit dem Sicherheitsschalter 7 die Schließstellung durch Auslesen der Daten aus dem Transponder detektiert wird und wenn der Betätiger 8 in der Schließstellung verriegelt ist, generiert der Sicherheitsschalter 7 ein Ausgangssignal mit dem der Betrieb der Anlage 4 freigegeben wird.

Die Figuren 2 bis 5 zeigen ein erstes Ausführungsbeispiel eines Verriegelungsmechanismus für die erfindungsgemäße Sicherheitseinrichtung 1. Der Verriegelungsmechanismus ist im vorliegenden Fall Bestandteil des Sicherheitsmoduls, d.h. des Sicherheitsschalters 7.

Dem Verriegelungsmechanismus ist der Betätiger 8 zugeordnet, der an der Schutztür befestigt ist. Der Betätiger 8 weist eine erste Aufnahme 9 in Form eines Langlochs auf. Zudem weist der Betätiger 8 zwei identische zweite Aufnahmen 10 auf, die ebenfalls in Form eines Langlochs ausgebildet sind.

Der Verriegelungsmechanismus weist eine drehbar gelagert Schaltscheibe 11 auf, die eine an ihrer Mantelfläche ausmündende Einkerbung 12 aufweist.

An beiden Stirnseiten der Schaltscheibe 11 ist ein Zahnrad 13 befestigt.

Unterhalb der Schaltscheibe 11 befindet sich ein Aktor 14 mit einem Zuhalteelement 15. Durch den Aktor 14, der z.B. ein Elektromotor oder Elektromagnet sein kann, kann das Zuhalteelement 15 lineare Stellbewegungen ausführen.

Das Zuhalteelement 15 mit der Schaltscheibe 11 und dem Zuhalteelement 15 bildet eine Zuhaltevorrichtung.

Erfindungsgemäß ist als Bestandteil des Verriegelungsmechanismus auch ein Sicherheitssystem vorgesehen, das im vorliegenden Fall zwei identische stabförmige Sicherheitselemente 16 aufweist.

Die Zuhaltevorrichtung und das Sicherheitssystem bilden eine zweikanalige Verriegelungsstruktur zur Verriegelung des Betätigers 8 in seiner Schließstellung aus. Vorteilhaft sind die Zuhaltevorrichtung und das Sicherheitssystem mit separaten Einheiten verriegelbar.

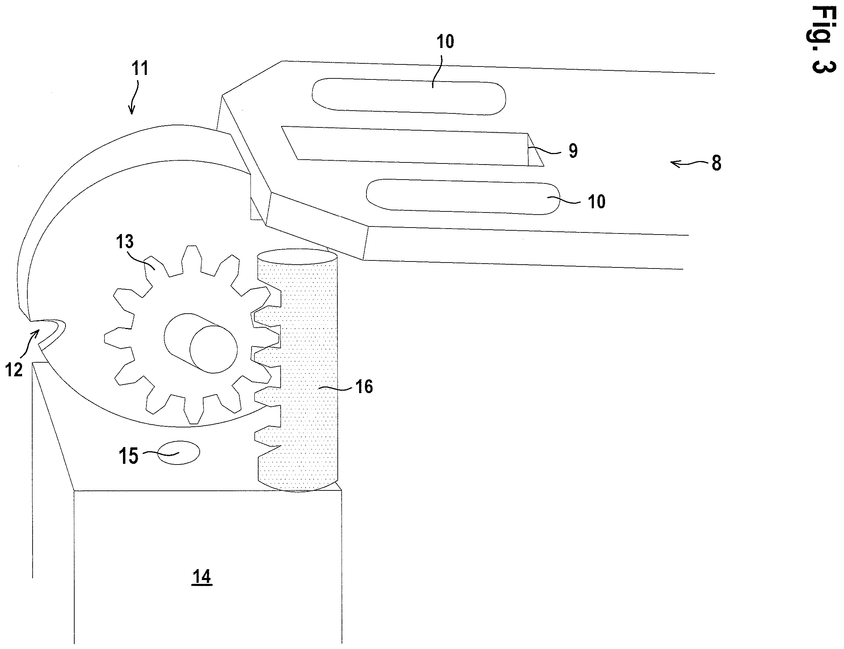

Figur 2 zeigt den Betätiger 8, wenn die Schutztür offen ist. Figur 3 zeigt den Betätiger 8, wenn die Schutztür angelehnt ist. In beiden Positionen hat der Betätiger 8 seine Schließstellung noch nicht erreicht.

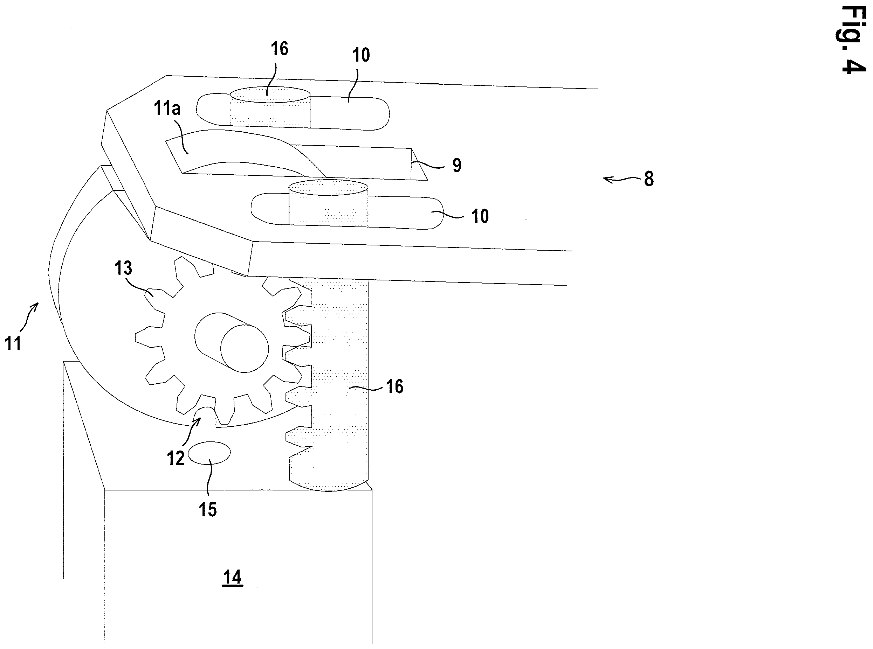

Figur 4 zeigt die Position des in die Schließstellung eingefahrenen Betätigers 8. Der Betätiger 8 ist dann eingerastet, wobei er durch die spezifische Außenkontur der Schaltscheibe 11 diese in ihre Sperrstellung gedreht hat. In dieser Sperrstellung ragt ein Segment 11a der Schaltscheibe 11 in die erste Aufnahme 9. Dabei liegt das Segment 11a an einem Rand der ersten Aufnahme 9 an, wodurch auf den Betätiger 8 wirkende Kräfte unmittelbar auf die Schaltscheibe 11 übertragen werden.

Durch die Zahnräder 13 sind weiterhin die Sicherheitselemente 16 des Sicherheitssystems in die zweiten Aufnahmen 10 des Betätigers 8 eingeführt. Dabei liegen die Sicherheitselemente 16 mit Spiel in den zweiten Aufnahmen 10, d.h. die Sicherheitselemente 16 sind nicht in Kontakt mit dem Betätiger 8, so dass auf den Betätiger 8 einwirkende Kräfte nicht auf die Sicherheitselemente 16 übertragen werden.

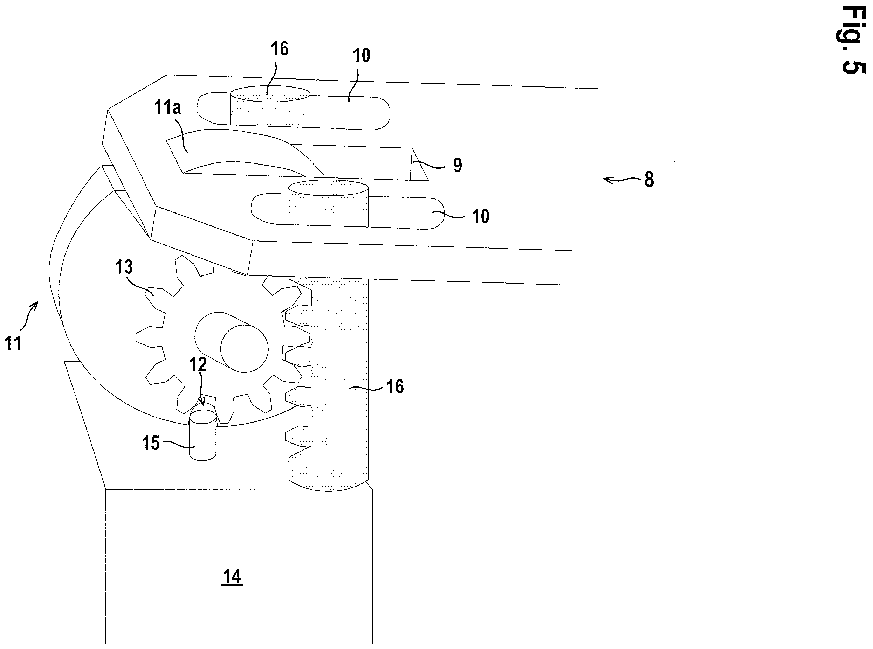

Figur 5 zeigt den mit der Zuhaltevorrichtung und dem Sicherheitssystem verriegelten Betätiger 8. Die Verriegelung erfolgt dadurch, dass in der Sperrstellung die Schaltscheibe 11 den Aktor 14 als Zuhalteelement 15 nach oben ausführt, so dass er in die Einkerbung 12 der Schaltscheibe 11 eingeführt ist. Damit ist die Schaltscheibe 11 verriegelt und damit auch das in die erste Aufnahme 9 eingeführte Segment 11a der Schaltscheibe 11, wodurch die Zuhaltevorrichtung den Betätiger 8 in seiner Schließstellung verriegelt. Zudem ist der Betätiger 8 auch mit den Sicherheitselementen 16 des Sicherheitssystems verriegelt, da durch das Zuhalteelement 15 in der Einkerbung 12 auch die Bewegungen der Sicherheitselemente 16 blockiert sind.

Bei einer auf den Betätiger 8 wirkenden Überlast kann es zu einem Abbrechen des Segments 11a der Schaltscheibe 11 kommen, so dass die Zuhaltevorrichtung den Betätiger 8 nicht mehr verriegelt. Dann jedoch übernimmt das Sicherheitssystem mit den Sicherheitselementen 16 allein die Verriegelung des Betätigers 8 und verhindert so ein unkontrolliertes Öffnen der Schutztür.

Das Abbrechen des Segments 11a der Schaltscheibe 11 kann mit Sensormitteln wie z.B. einem optischen Sensor überwacht werden. Zudem wird die Position des Zuhalteelements 15 überwacht.

Wird dabei registriert, dass zwar das Zuhalteelement 15 ausgefahren ist, um die Schaltscheibe 11 zu verriegeln, jedoch das Segment 11a der Schaltscheibe 11 in der ersten Aufnahme 9 nicht detektiert wird, liegt eine Fehlfunktion der Zuhaltevorrichtung vor. Dementsprechend generiert der Sicherheitsschalter 7 ein Ausgangssignal mit dem die Anlage 4 in einen sicheren Zustand überführt wird, insbesondere stillgesetzt wird.

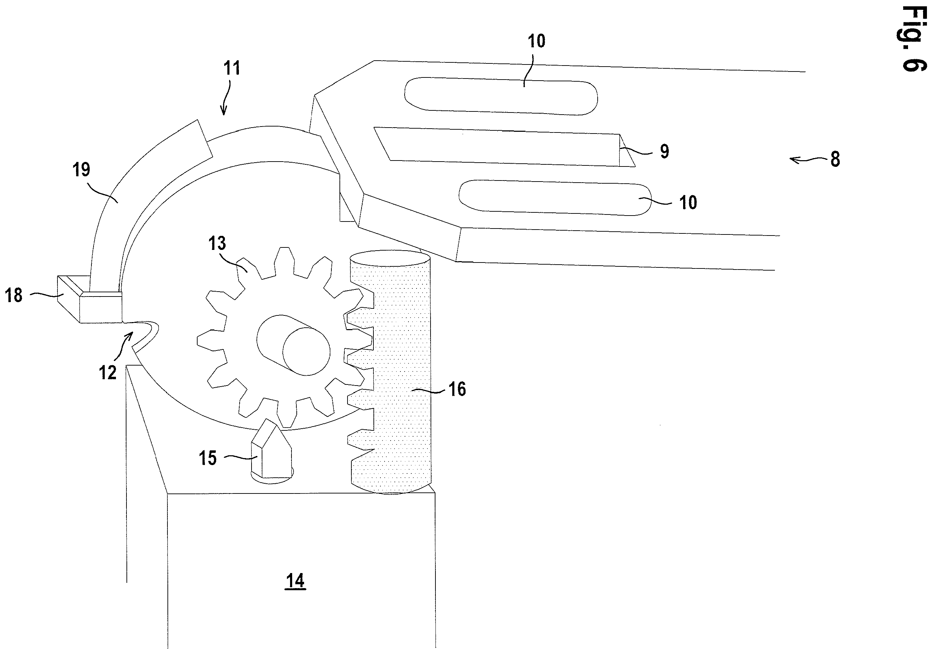

Die Figuren 6 bis 8 zeigen ein zweites Ausführungsbeispiel eines Verriegelungsmechanismus für die erfindungsgemäße Sicherheitseinrichtung 1.

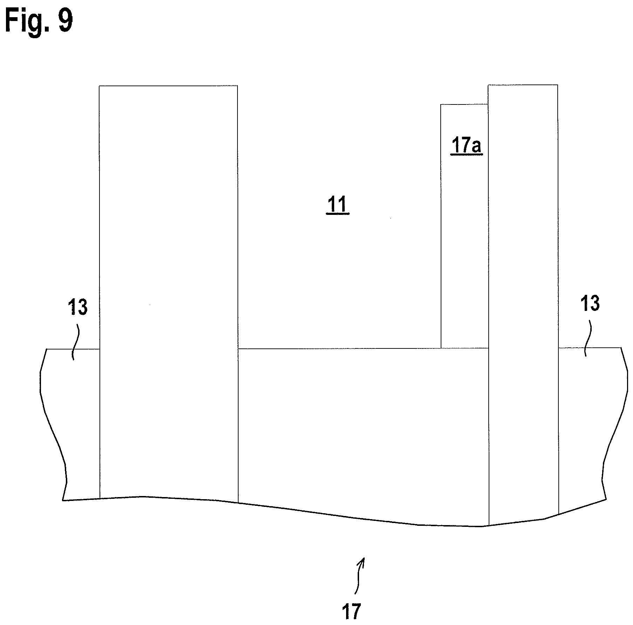

Die Ausführungsform der Figuren 6 bis 8 unterscheidet sich von der Ausführungsform der Figuren 2 bis 5 dadurch, dass als Überlastschutz eine Sicherheitskupplung 17 zur Anbindung der Zahnräder 13 an die Schaltscheibe 11 vorgesehen ist (Figur 9). Die Sicherheitskupplung 17 ist eine Überlastkupplung, wobei diese im vorliegenden Fall als Rutschkupplung mit einem Reibelement 17a ausgebildet ist. Generell kann die Sicherheitskupplung 17 auch als Torsionsstab oder Federkupplung ausgebildet sein. Die Feder der Federkupplung bewirkt eine Selbstrückstellung.

Der Betätiger 8 der Figuren 6 bis 8 entspricht dem Betätiger 8 der Ausführungsform der Figuren 2 bis 5.

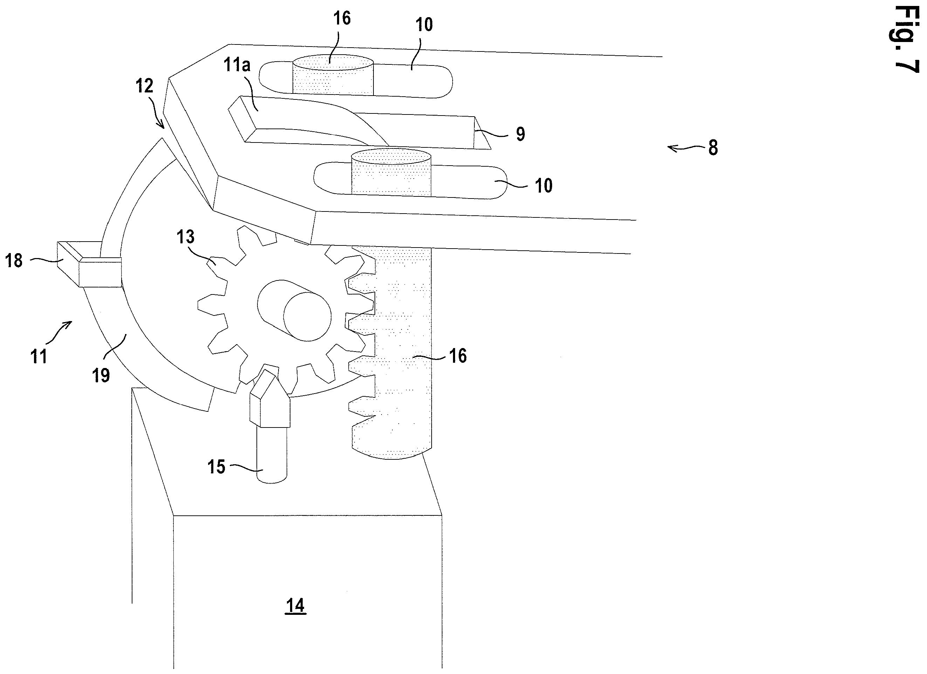

Figur 6 zeigt den Verriegelungsmechanismus bei offener Schutztür, d.h. der Betätiger 8 befindet sich nicht in seiner Schließstellung. Figur 7 zeigt den mit der Zuhaltevorrichtung und dem Sicherheitssystem verriegelten Betätiger 8 in seiner Schließstellung.

Analog zur Ausführungsform der Figuren 2 bis 5 erfolgt die Verriegelung dadurch, dass das Segment 11a in die erste Aufnahme 9 des Betätigers 8 ragt, und dass die Sicherheitselemente 16 mit Spiel in die zweiten Aufnahmen 10 eingeführt sind. Die Einführung des Segments 11a in die erste Aufnahme 9 erfolgt durch Drehen der Schaltscheibe 11. Das Einführen der Sicherheitselemente 16 in die zweiten Aufnahmen 10 erfolgt mit den Zahnrädern 13.

Im vorliegenden Fall erfolgt die Verriegelung der Schaltscheibe 11 und der Sicherheitselemente 16 dadurch, dass das Zuhalteelement 15 mittels des Aktors 14 ausgefahren wird und zwischen zwei Zähne eines Zahnrads 13 eingeführt ist.

Zur Erfassung der Drehstellung der Schaltscheibe 11 ist als Sensormittel eine Lichtschranke 18 vorhanden. Weiterhin steht von der Mantelfläche der Schaltscheibe 11 ein Vorsprung 19 hervor, der sich in Umfangsrichtung der Schaltscheibe 11 über seinen vorgegebenen Winkelbereich erstreckt.

Befindet sich der Betätiger 8 noch nicht in seiner Schließstellung (Figur 6) liegt der Vorsprung 19 der Schaltscheibe 11 im Strahlengang der Lichtschranke 18, d.h. der Strahlengang der Lichtstrahlen der Lichtschranke 18 ist unterbrochen, d.h. die Lichtschranke 18 generiert ein entsprechendes Schaltsignal. Befindet sich der Betätiger 8 in seiner Schließstellung und ist mit der Zuhaltevorrichtung und dem Sicherheitssystem verriegelt, liegt der Vorsprung 19 der Schaltscheibe 11 nicht im Strahlengang der Lichtschranke 18 und diese generiert ein entsprechendes Schaltsignal (Figur 7).

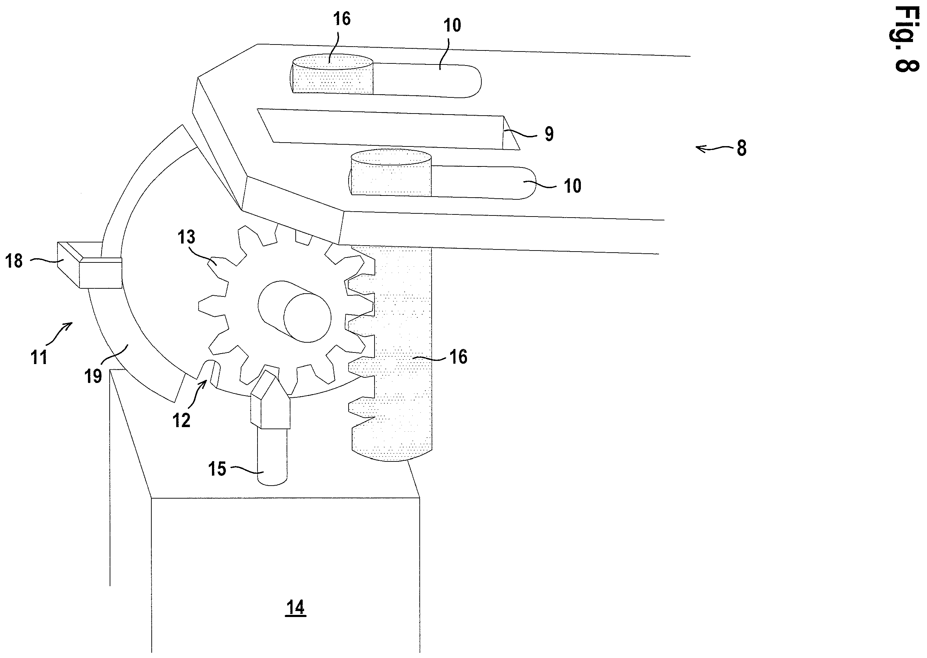

Bei einer auf den Betätiger 8 wirkenden Überlast wird diese nur auf die Schaltscheibe 11 nicht aber auf die Sicherheitselemente 16 übertragen (Figur 8). Dies wird dadurch bewirkt, dass bei Auftreten der Überlast die Sicherheitskupplung 17 anspricht. Durch die wirkende Überlast wird die Schaltscheibe 11 aus der Sperrstellung herausgedreht, so dass das Segment 11a nicht mehr in die erste Aufnahme 9 eingeführt ist, d.h. die Verriegelung mit der Zuhaltevorrichtung ist aufgehoben. Durch das Ansprechen der Sicherheitskupplung 17 sind die Sicherheitselemente 16 von der Bewegung der Schaltscheibe 11 entkoppelt und verriegeln den Betätiger 8.

Mit Erfassungsmitteln wird festgestellt, dass der Aktor 14 das Zuhalteelement 15 in seine Verriegelungsposition ausgefahren hat. Zudem wird mit der Lichtschranke 18 festgestellt, dass der Vorsprung 19 der Schaltschiene 11 im Strahlengang der Lichtstrahlen liegt. Durch die Kombination der Signale der Erfassungsmittel und der Lichtschranke 18 wird somit die Fehlfunktion der Zuhaltevorrichtung aufgrund der Überlast festgestellt, so dass der Sicherheitsschalter 7 ein Ausgangssignal generiert, mit dem die Anlage 4 in einen sicheren Zustand überführt wird.

### Bezugszeichenliste

- (1): Sicherheitseinrichtung
- (2): Schutzeinrichtung
- (3): Gefahrenbereich
- (4): Anlage
- (5): Sicherheitssteuerung
- (6): Umzäunung
- (7): Sicherheitsschalter
- (8): Betätiger
- (9): erste Aufnahme
- (10): zweite Aufnahme
- (11): Schaltscheibe
- (11a): Segment
- (12): Einkerbung
- (13): Zahnrad
- (14): Aktor
- (15): Zuhalteelement
- (16): Sicherheitselement
- (16a): Segment
- (17): Sicherheitskupplung
- (17a): Reibelement
- (18): Lichtschranke
- (19): Vorsprung

## Patentansprüche

1. Sicherheitseinrichtung (1) mit einem Sicherheitsmodul und einem relativ zu diesem beweglichen Betätiger (8), wobei der Betätiger (8) in eine Schließstellung in oder am Sicherheitsmodul einbringbar ist, und wobei eine Zuhaltevorrichtung vorhanden ist, mittels derer der Betätiger (8) in seiner Schließstellung verriegelbar ist, wobei ein Sicherheitssystem vorhanden ist, mittels dessen der Betätiger (8) in seiner Schließstellung zusätzlich verriegelbar ist, wobei das Sicherheitssystem ausgebildet ist, den Betätiger (8) in seiner Schließstellung zu verriegeln, falls durch eine Fehlfunktion der Zuhaltevorrichtung dessen Verriegelungsfunktion aufgehoben ist, **dadurch gekennzeichnet, dass** die Verriegelung des Betätigers (8) durch die Zuhaltevorrichtung dadurch bewirkt ist, dass ein Element der Zuhaltevorrichtung in eine erste Aufnahme (9) des Betätigers (8) eingeführt ist, und dass die Verriegelung des Betätigers (8) durch das Sicherheitssystem dadurch bewirkt ist, dass ein Element des Sicherheitssystems in eine zweite Aufnahme (10) des Betätigers (8) eingeführt ist.

2. Sicherheitseinrichtung (1) nach Anspruch 1, **dadurch gekennzeichnet, dass** die Zuhaltevorrichtung und das Sicherheitssystem eine diversitäre redundante mechanische Verriegelungsstruktur ausbilden.

3. Sicherheitseinrichtung (1) nach einem der Ansprüche 1 oder 2, **dadurch gekennzeichnet, dass** bei einem mechanischen Bruch der Zuhaltevorrichtung die Verriegelung des Betätigers (8) durch die Zuhaltevorichtung aufgehoben ist und der Betätiger (8) allein durch das Sicherheitssystem in seiner Schließstellung verriegelt ist.

4. Sicherheitseinrichtung (1) nach einem der Ansprüche 1 bis 3, **dadurch gekennzeichnet, dass** bei Einwirken äußerer Kräfte auf den in seiner Schließstellung mittels der Zuhaltevorrichtung und des Sicherheitssystems verriegelten Betätiger (8) die Zuhaltevorrichtung mit größeren Kräften als das Sicherheitssystem beaufschlagt ist.

5. Sicherheitseinrichtung (1) nach Anspruch 4, **dadurch gekennzeichnet, dass** auf den in seiner Schließstellung mittels der Zuhaltevorrichtung und des Sicherheitssystems verriegelten Betätiger (8) einwirkende Kräfte nur auf die Zuhaltevorrichtung unmittelbar übertragen werden.

6. Sicherheitseinrichtung (1) nach Anspruch 5, **dadurch gekennzeichnet, dass** das Element der Zuhaltevorrichtung in direktem Kontakt mit der ersten Aufnahme (9) ist, und dass das Element des Sicherheitssystems mit Spiel in der zweiten Aufnahme (10) eingeführt ist.

7. Sicherheitseinrichtung (1) nach einem der Ansprüche 1 bis 6, **dadurch gekennzeichnet, dass** die Zuhaltevorrichtung und das Sicherheitssystem voneinander unabhängige Stellbewegungen durchführen.

8. Sicherheitseinrichtung (1) nach einem der Ansprüche 1 bis 6, **dadurch gekennzeichnet, dass** die Zuhaltevorrichtung und das Sicherheitssystem gekoppelte Stellbewegungen durchführen.

9. Sicherheitseinrichtung (1) nach Anspruch 8, **dadurch gekennzeichnet, dass** bei einer Fehlfunktion der Zuhaltevorrichtung das Sicherheitssystem von der Zuhaltevorrichtung entkoppelt ist.

10. Sicherheitseinreichtung (1) nach Anspruch 9, **dadurch gekennzeichnet, dass** die Entkoppelung durch einen Bruch des in die erste Aufnahme (9) eingeführten Elements der Zuhaltevorrichtung bewirkt ist, oder dass die Entkoppelung durch eine bei einer auf die Zuhaltevorrichtung einwirkenden Überlast ansprechenden Sicherheitskupplung (17) bewirkt ist.

11. Sicherheitseinrichtung (1) nach einem der Ansprüche 1 bis 10, **dadurch gekennzeichnet, dass** das Sicherheitssystem ein Stellbewegungen ausführendes Sicherheitselement (16) aufweist, das in die zweite Aufnahme (10) einführbar ist.

12. Sicherheitseinrichtung (1) nach einem der Ansprüche 1 bis 11, **dadurch gekennzeichnet, dass** die Zuhaltevorrichtung ein intermediäres Element aufweist, welches ein Segment (11a) aufweist, das in einer Sperrstellung des intermediären Elements in die erste Aufnahme (9) greift, und dass das intermediäre Element mittels eines Zuhalteelements (15) in seiner Sperrstellung verriegelbar ist.

13. Sicherheitseinrichtung (1) nach Anspruch 12, **dadurch gekennzeichnet, dass** das intermediäre Element eine Schaltscheibe (11) ist.

14. Sicherheitseinrichtung (1) nach einem der Ansprüche 1 bis 13, **dadurch gekennzeichnet, dass** Erfassungsmittel zur Erfassung einer Fehlfunktion der Zuhaltevorrichtung vorhanden sind.

15. Sicherheitseinrichtung (1) nach einem der Ansprüche 1 bis 14, **dadurch gekennzeichnet, dass** das Sicherheitsmodul ein Sicherheitsschalter (7) ist.

16. Verfahren zum Betrieb einer Sicherheitseinrichtung (1) mit einem Sic herheitsmodul und einem relativ zu diesem beweglichen Betätiger (8), wobei der Betätiger (8) in eine Schließstellung in oder am Sicherheitsmodul einbringbar ist, und wobei eine Zuhaltevorrichtung vorhanden ist, mittels derer der Betätiger (8) in seiner Schließstellung verriegelbar ist, wobei ein Sicherheitssystem vorhanden ist, mittels dessen der Betätiger (8) in seiner Schließstellung zusätzlich verriegelbar ist, wobei das Sicherheitssystem ausgebildet ist, den Betätiger (8) in seiner Schließstellung zu verriegeln, falls durch eine Fehlfunktion der Zuhaltevorrichtung dessen Verriegelungsfunktion aufgehoben ist, **dadurch gekennzeichnet, dass** die Verriegelung des Betätigers (8) durch die Zuhaltevorrichtung dadurch bewirkt ist, dass ein Element der Zuhaltevorrichtung in eine erste Aufnahme (9) des Betätigers (8) eingeführt ist, und dass die Verriegelung des Betätigers (8) durch das Sicherheitssystem dadurch bewirkt ist, dass ein Element des Sicherheitssystems in eine zweite Aufnahme (10) des Betätigers (8) eingeführt ist.

## Claims

1. Safety device (1) comprising a safety module and an actuator (8) movable relative thereto, wherein the actuator (8) can be moved into a closed position in or on the safety module, and wherein a locking device is provided by means of which the actuator (8) can be locked in its closed position, wherein a safety system is provided by means of which the actuator (8) can be additionally locked in its closed position, wherein the safety system is designed to lock the actuator (8) in its closed position if its locking function is disabled due to a malfunction of the locking device, **characterised in that** the locking of the actuator (8) by the locking device is effected by an element of the locking device being inserted into a first receptacle (9) of the actuator (8), and that the locking of the actuator (8) by the safety system is effected by an element of the safety system being inserted into a second receptacle (10) of the actuator (8).

2. Safety device (1) according to claim 1, **characterised in that** the locking device and the safety system form a diverse redundant mechanical locking structure.

3. Safety device (1) according to one of claims 1 or 2, **characterised in that**, in the event of a mechanical failure of the locking device, the locking of the actuator (8) by the locking device is released and the actuator (8) is locked in its closed position solely by the safety system.

4. Safety device (1) according to any one of claims 1 to 3, **characterised in that**, when external forces act on the actuator (8) locked in its closed position by means of the locking device and the safety system, the locking device is subjected to greater forces than the safety system.

5. Safety device (1) according to claim 4, **characterised in that** forces acting on the actuator (8), which is locked in its closed position by means of the locking device and the safety system, are transmitted directly only to the locking device.

6. Safety device (1) according to claim 5, **characterised in that** the element of the locking device is in direct contact with the first receptacle (9), and that the element of the safety system is inserted with play into the second receptacle (10).

7. Safety device (1) according to any one of claims 1 to 6, **characterised in that** the locking device and the safety system perform independent actuating movements.

8. Safety device (1) according to any one of claims 1 to 6, **characterised in that** the locking device and the safety system perform coupled actuating movements.

9. Safety device (1) according to claim 8, **characterised in that**, in the event of a malfunction of the locking device, the safety system is decoupled from the locking device.

10. Safety device (1) according to claim 9, **characterised in that** the decoupling is effected by a break in the element of the locking device inserted into the first receptacle (9), or that the decoupling is effected by a safety clutch (17) which responds to an overload acting on the locking device.

11. Safety device (1) according to any one of claims 1 to 10, **characterised in that** the safety system comprises a safety element (16) capable of performing actuating movements, which can be inserted into the second receptacle (10).

12. Safety device (1) according to any one of claims 1 to 11, **characterised in that** the locking device comprises an intermediate element which has a segment (Ila) that engages with the first receptacle (9) when the intermediate element is in a locking position, and **in that** the intermediate element can be locked in its locking position by means of a locking element (15).

13. Safety device (1) according to claim 12, **characterised in that** the intermediate element is a switching disc (11).

14. Safety device (1) according to any one of claims 1 to 13, **characterised in that** detection means are provided for detecting a malfunction of the locking device.

15. Safety device (1) according to any one of claims 1 to 14, **characterised in that** the safety module is a safety switch (7).

16. Method for operating a safety device (1) comprising a safety module and an actuator (8) movable relative thereto, wherein the actuator (8) can be moved into a closed position within or on the safety module, and wherein a locking device is provided by means of which the actuator (8) can be locked in its closed position, wherein a safety system is provided by means of which the actuator (8) can be additionally locked in its closed position, wherein the safety system is designed to lock the actuator (8) in its closed position if its locking function is disabled due to a malfunction of the locking device, **characterised in that**
the locking of the actuator (8) by the locking device is effected by an element of the locking device being inserted into a first receptacle (9) of the actuator (8), and that the locking of the actuator (8) by the safety system is effected by an element of the safety system being inserted into a second receptacle (10) of the actuator (8).

## Revendications

1. Dispositif de sécurité (1) comprenant un module de sécurité et un actionneur (8) mobile par rapport à celui-ci, l'actionneur (8) pouvant être amené dans une position de fermeture à l'intérieur ou sur le module de sécurité, et un dispositif de verrouillage étant prévu, au moyen duquel l'actionneur (8) peut être verrouillé dans sa position de fermeture, un système de sécurité étant prévu, au moyen duquel l'actionneur (8) peut être verrouillé de manière supplémentaire dans sa position de fermeture, le système de sécurité étant conçu pour verrouiller l'actionneur (8) dans sa position de fermeture si, en raison d'un dysfonctionnement du dispositif de verrouillage, la fonction de verrouillage de ce dernier est désactivée, **caractérisé en ce que** le verrouillage de l'actionneur (8) par le dispositif de verrouillage est obtenu par l'insertion d'un élément du dispositif de verrouillage dans un premier logement (9) de l'actionneur (8), et **en ce que** le verrouillage de l'actionneur (8) par le système de sécurité est obtenu par l'insertion d'un élément du système de sécurité dans un second logement (10) de l'actionneur (8).

2. Dispositif de sécurité (1) selon la revendication 1, **caractérisé en ce que** le dispositif de verrouillage et le système de sécurité forment une structure de verrouillage mécanique redondante de type diversité.

3. Dispositif de sécurité (1) selon l'une des revendications 1 ou 2, **caractérisé en ce qu'**en cas de rupture mécanique du dispositif de verrouillage, le verrouillage de l'actionneur (8) par le dispositif de verrouillage est levé et l'actionneur (8) est verrouillé dans sa position de fermeture uniquement par le système de sécurité.

4. Dispositif de sécurité (1) selon l'une des revendications 1 à 3, **caractérisé en ce que**, lorsque des forces extérieures agissent sur l'actionneur (8) verrouillé dans sa position de fermeture au moyen du dispositif de verrouillage et du système de sécurité, le dispositif de verrouillage est soumis à des forces plus importantes que le système de sécurité.

5. Dispositif de sécurité (1) selon la revendication 4, **caractérisé en ce que** les forces agissant sur l'actionneur (8), verrouillé dans sa position de fermeture au moyen du dispositif de verrouillage et du système de sécurité, ne sont transmises directement qu'au dispositif de verrouillage.

6. Dispositif de sécurité (1) selon la revendication 5, **caractérisé en ce que** l'élément du dispositif de verrouillage est en contact direct avec le premier logement (9), et **en ce que** l'élément du système de sécurité est inséré avec du jeu dans le second logement (10).

7. Dispositif de sécurité (1) selon l'une des revendications 1 à 6, **caractérisé en ce que** le dispositif de verrouillage et le système de sécurité effectuent des mouvements de réglage indépendants l'un de l'autre.

8. Dispositif de sécurité (1) selon l'une des revendications 1 à 6, **caractérisé en ce que** le dispositif de verrouillage et le système de sécurité effectuent des mouvements de réglage couplés.

9. Dispositif de sécurité (1) selon la revendication 8, **caractérisé en ce qu'**en cas de dysfonctionnement du dispositif de verrouillage, le système de sécurité est désaccouplé du dispositif de verrouillage.

10. Dispositif de sécurité (1) selon la revendication 9, **caractérisé en ce que** le découplage est provoqué par une rupture de l'élément du dispositif de verrouillage introduit dans le premier logement (9), ou **en ce que** le découplage est provoqué par un accouplement de sécurité (17) réagissant à une surcharge agissant sur le dispositif de verrouillage.

11. Dispositif de sécurité (1) selon l'une des revendications 1 à 10, **caractérisé en ce que** le système de sécurité comporte un élément de sécurité (16) effectuant des mouvements de réglage, qui peut être inséré dans le deuxième logement (10).

12. Dispositif de sécurité (1) selon l'une des revendications 1 à 11, **caractérisé en ce que** le dispositif de verrouillage comporte un élément intermédiaire qui comporte un segment (Ila) s'engageant dans le premier logement (9) lorsque l'élément intermédiaire se trouve dans une position de blocage, et **en ce que** l'élément intermédiaire peut être verrouillé dans sa position de blocage au moyen d'un élément de verrouillage (15).

13. Dispositif de sécurité (1) selon la revendication 12, **caractérisé en ce que** l'élément intermédiaire est un disque de commutation (11).

14. Dispositif de sécurité (1) selon l'une des revendications 1 à 13, **caractérisé en ce que** des moyens de détection sont prévus pour détecter un dysfonctionnement du dispositif de verrouillage.

15. Dispositif de sécurité (1) selon l'une des revendications 1 à 14, **caractérisé en ce que** le module de sécurité est un interrupteur de sécurité (7).

16. Procédé de fonctionnement d'un dispositif de sécurité (1) comprenant un module de sécurité et un actionneur (8) mobile par rapport à celui-ci, l'actionneur (8) pouvant être amené dans une position de fermeture à l'intérieur ou sur le module de sécurité, et un dispositif de verrouillage étant prévu, au moyen duquel l'actionneur (8) peut être verrouillé dans sa position de fermeture, un système de sécurité étant prévu, au moyen duquel l'actionneur (8) peut être verrouillé de manière supplémentaire dans sa position de fermeture, le système de sécurité étant conçu pour verrouiller l'actionneur (8) dans sa position de fermeture si, en raison d'un dysfonctionnement du dispositif de retenue, la fonction de verrouillage de ce dernier est désactivée, **caractérisé en ce que**
le verrouillage de l'actionneur (8) par le dispositif de verrouillage est effectué par l'insertion d'un élément du dispositif de verrouillage dans un premier logement (9) de l'actionneur (8), et que le verrouillage de l'actionneur (8) par le système de sécurité est obtenu par l'insertion d'un élément du système de sécurité dans un second logement (10) de l'actionneur (8).
